# EUROPEAN PATENT SPECIFICATION

(11) **EP 3 484 155 B1**
(45) Date of publication and mention of the grant of the patent: **18.10.2023**
(21) Application number: 17823673.3
(22) Date of filing: 07.07.2017
(51) Int. Cl.: H04N 19/31, H04N 19/67, H04N 19/102, H04N 19/132, H04N 19/159, H04N 19/164

(54) **METHOD AND DEVICE FOR PROCESSING VIDEO DATA**
VERFAHREN UND VORRICHTUNG ZUR VERARBEITUNG VON VIDEODATEN
PROCÉDÉ ET DISPOSITIF DE TRAITEMENT DE DONNÉES VIDÉO

(30) Priority: 07.07.2016 CN 201610531620
(43) Date of publication of application: 15.05.2019
(73) Proprietor: Tencent Technology (Shenzhen) Company Limited, Shenzhen, Guangdong, 518057 (CN)
(72) Inventor: SHI, Yongfang, Shenzhen, Guangdong 518057 (CN); GAO, Anlin, Shenzhen, Guangdong 518057 (CN); DAI, Chao, Shenzhen, Guangdong 518057 (CN); LV, Jing, Shenzhen, Guangdong 518057 (CN)
(74) Representative: Witte, Weller & Partner Patentanwälte mbB
(86) International application number: PCT/CN2017/092178
(87) International publication number: WO 2018/006861

(56) References cited:
- EP-A1- 1 447 988
- WO-A1-2014/005077
- CN-A- 101 662 672
- CN-A- 104 125 464
- CN-A- 105 009 591
- US-A1- 2008 225 735
- US-A1- 2011 271 163
- US-A1- 2011 299 591
- DANNY HONG ET AL: "H.264 Hierarchical P Coding in the Context of Ultra-Low Delay, Low Complexity Applications", PICTURE CODING SYMPOSIUM 2010; 8-12-2010 - 10-12-2010; NAGOYA,, 8 December 2010 (2010-12-08), XP030081950,
- RAHUL VANAM ET AL: "Error-resilient video coding for wireless video telephony applications", PROCEEDINGS OF SPIE, vol. 8499, 15 October 2012 (2012-10-15), pages 84991N-84991N-9, XP055064612, ISSN: 0277-786X, DOI: 10.1117/12.940754

## Description

The application claims priority to China Patent Application No. 201610531620.7, filed with the Chinese Patent Office on July 7, 2016 and entitled "METHOD AND DEVICE FOR PROCESSING VIDEO DATA".

### FIELD OF THE TECHNOLOGY

The present disclosure relates to the field of video data processing technologies, and particularly, relates to a method and an apparatus for processing video data.

### BACKGROUND OF THE DISCLOSURE

In recent years, with the development of smartphones and mobile Internet, a VoIP (Video/voice over Internet Protocol, an application of transmitting audio and video data in real time based on an IP network) video call application provides brand new communication experience to people. However, video lag and jitter may occur due to signal fading and burst packet loss, affecting video quality.

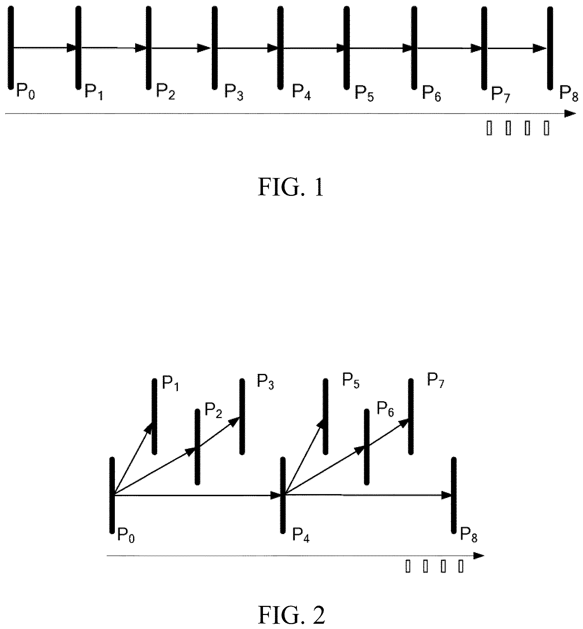

An IPPP coding architecture is usually used in a conventional video compression and coding standard. Under the architecture, there are two types of frames of video data. One is I frame (I frame, also referred to as an intra-frame coded frame), and the other is P frame (P frame, also referred to as an inter-frame coded frame or forward prediction coded frame). Referring to FIG. 1, FIG. 1 is a schematic diagram of an IPPP coding architecture. The IPPP coding architecture is a chain reference structure. Whether a frame of video data can be successfully decoded depends on not only integrity of data of the frame but also whether a reference frame is decoded. In the IPPP coding architecture, the I frame can be independently decoded without referring to any frame, and the P frame can be successfully decoded with reference to a reference frame thereof. In the IPPP coding architecture, GOPs (Group of Picture, a smallest repeating unit of video encoding) are separated by I frames. Failure of decoding of any frame in the GOP leads to that no frames after the frame in the GOP can successfully decoded, causing a video lag situation.

Regarding this, an HPP (Hierarchical P-frame Prediction) coding method is proposed in the conventional technology. Referring to the HPP coding structure shown in FIG. 2, frames in different TL (Temporal Layer) have different importance, which can alleviate a reference coupling relationship between adjacent frames to some extent. As shown in FIG. 2, in the HPP structure, a frame in a higher TL refers to a frame in a lower TL, and adjacent frames are in different TLs. Therefore, all frames following a lost frame can be successfully decoded, unless the lost frame is in a lowest TL. For example, the loss of the frame P5 does not affect successful decoding of the following frames P6, P7, and P8.

Although the HPP coding method alleviates the reference coupling relationship between adjacent frames to some extent, when packet loss occurs, some frames still cannot be successfully decoded at a decoder side, causing video lag. The document DANNY HONG ET AL: "H.264 Hierarchical P Coding in the Context of Ultra-Low Delay, Low Complexity Applications",PICTURE CODING SYMPOSIUM 2010; 8-12-2010 - 10-12-2010; NAGOYA" 8 December 2010 (2010-12-08) discloses Hierarchical P Coding.

### SUMMARY

In view of the above, a method and an apparatus for processing video data are provided in the present disclosure, so as to resolve a problem in an existing HPP coding method that a decoder side cannot decode some frames when packet loss occurs in data transmission.

To achieve the foregoing purpose, the following solutions are provided.

A method for processing video data is applied to a decoder side, according to claim 1.

An apparatus for processing video data is applied to a decoder according to claim 4.

### BRIEF DESCRIPTION OF THE DRAWINGS

To describe the technical solutions in the embodiments of the present disclosure or in the existing technology more clearly, the following briefly describes the accompanying drawings required for describing the embodiments or the existing technology. Apparently, the accompanying drawings in the following description show merely some embodiments of the present disclosure, and a person of ordinary skill in the art may still derive other drawings from these accompanying drawings without creative efforts.
FIG. 1 is a schematic structural diagram of IPPP coding;
FIG. 2 is a schematic structural diagram of HPP coding;
FIG. 3 is a flowchart of a method for processing video data applied to an encoder side according to an example of the present disclosure;
FIG. 4 is a flowchart of another method for processing video data applied to an encoder side according to an example of the present disclosure;
FIG. 5 is a flowchart of still another method for processing video data applied to an encoder side according to an example of the present disclosure;
FIG. 6 is a flowchart of a method for processing video data applied to a decoder side according to an embodiment of the present disclosure;
FIG. 7 is a flowchart of another method for processing video data applied to a decoder side according to an embodiment of the present disclosure;
FIG. 8 is a flowchart of still another method for processing video data applied to a decoder side according to an embodiment of the present disclosure;
FIG. 9 is a flowchart of still another method for processing video data applied to a decoder side according to an embodiment of the present disclosure;
FIG. 10 is a flowchart of still another method for processing video data applied to a decoder side according to an embodiment of the present disclosure;
FIG. 11 is a schematic structural diagram of an apparatus for processing video data applied to an encoder side according to an example of the present disclosure;
FIG. 12 is a schematic structural diagram of an apparatus for processing video data applied to a decoder side according to an embodiment of the present disclosure; and
FIG. 13 is a schematic diagram of hardware structure of a terminal according to an embodiment of the present disclosure.

### DESCRIPTION OF EMBODIMENTS

In a video data processing solution of the present disclosure, a decoder side receives a video packet sent by an encoder side, to process video data. The video encoder side uses an HPP coding structure. The video encoder side collects an original video data stream, performs source compression and coding in a form of an image sequence, and at last, generates an HPP bitstream. When performing HPP coding, the encoder side may configure, according to hardware performance and an application scenario of the encoder side, the maximum layer quantity as M+1 and the maximum reference distance as L=2^M in the HPP structure. As shown in FIG. 2, M=2, that is, in a three-layer HPP reference structure, a frame in a higher temporal layer TL refers to a frame in a lower temporal layer TL. L=4, the maximum reference distance corresponds to that P refers to P0, and P8 refers to P4.

Further, based on the source HPP video coding, to cope with packet loss, the video encoder side redundancy-codes the HPP bitstream by using a forward error correction FEC coding method and sequentially sends frames in the redundancy-coded HPP bitstream to the decoder side.

A method for adding a redundancy packet to the HPP bitstream may be as follows. First, each frame of the HPP bitstream are divided p video packets. Then q redundancy packets are added to the frame by using a forward error correction (FEC) coding method. At least, the video packets and the redundancy packets in the frame are transmitted to the decoder side. The method can resist packet loss of the q video packets. When a packet is lost, a redundancy packet may be used to recover the lost video packet. q and p are both positive integers. It should be noted that the quantity of added redundancy packets decides a loss resistance capability. More redundancy packets may be added to more important packets that need to be especially protected.

Based on the HPP coding structure, a frame in a higher temporal layer refers to a frame in a lower TL. Therefore, a frame in a lower temporal layer has a higher importance level. In the present disclosure, redundancy packets in frames in lower temporal layers may be set to be more than those in higher temporal layers. For example, 100% redundancy packets are set for frames in a TL0 layer, that is, the quantity of video packets is equal to that of redundancy packets; 50% redundancy packets are set for frames in a TL1 layer ..., no redundancy packet is set for frames in the highest TL layer.

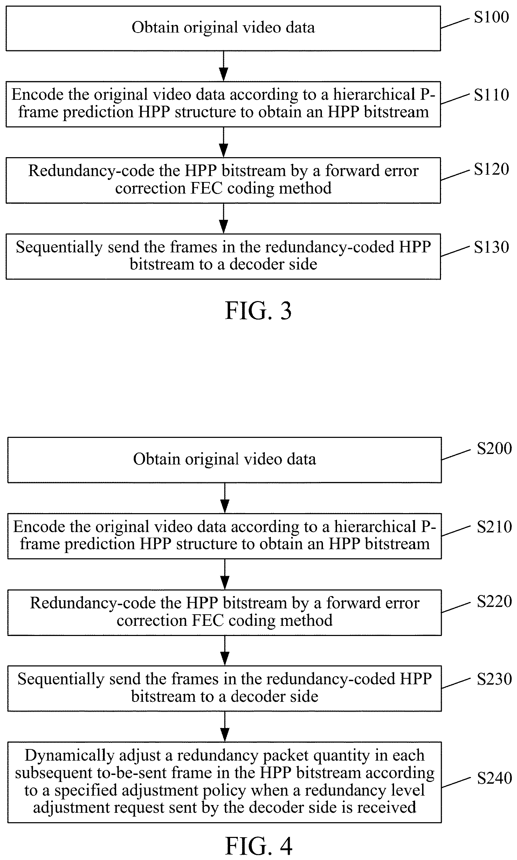

In the following, in the embodiments of the present disclosure, a video data processing process is described from the perspective of the encoder side. Referring to FIG. 3, FIG. 3 is a flowchart of a method for processing video data applied to an encoder side according to an example of the present disclosure.

As shown in FIG. 3, the method includes steps S100 to S130.

In step S100, original video data is obtained.

In step S 110, the original video data is encoded according to a hierarchical P-frame prediction HPP structure to obtain an HPP bitstream.

Specifically, according to hardware performance and a use scenario of the encoder side, the maximum layer quantity may be configured as M+1 and the maximum reference distance may be configured as L=2^M in the HPP structure.

In step S120, the HPP bitstream is redundancy-coded by a forward error correction FEC coding method.

Specifically, when the HPP bitstream is redundancy-coded, a quantity of redundancy packets of a frame in a higher temporal layer may be less than a quantity of redundancy packets of a frame in a lower temporal layer.

Because importance of frames in lower temporal layers is higher than that of frames in higher temporal layers in the HPP structure, redundancy packet quantities of the frames in lower temporal layers are greater than those of the frames in higher temporal layers, so that limited redundancy packet resources can be used to protect frames with higher importance, thereby improving a redundancy utilization rate.

In step S130, the frames in the redundancy-coded HPP bitstream are sequentially sent to a decoder side.

The encoder side sequentially sends the frames to the decoder side according to time sequences of the frames in the HPP bitstream.

In the method for processing video data provided in this example of the present disclosure, the encoder side encodes obtained original video data according to a hierarchical P-frame prediction HPP structure to obtain an HPP bitstream, redundancy-codes the HPP bitstream by a forward error correction FEC coding method, where a quantity of redundancy packets of a frame in a higher temporal layer is less than a quantity of redundancy packets of a frame in a lower temporal layer, and at last, sequentially sends the frames in the redundancy-coded HPP bitstream to a decoder side. It can be learned from the above that in the present disclosure, the HPP coding structure is combined with FEC redundancy coding, and a redundancy packet is added to the HPP bitstream encoded according to the HPP coding structure. In addition, in adding the redundancy packets, more redundancy packets are added to frames in lower temporal layers in the HPP structure, so as to especially protect frames in lower temporal layers which are of high importance. In this manner, even if some packets is lost in a data transmission process, the decoder side can perform packet loss recovery by using the redundancy packet, thereby greatly improving a decoding success rate and reducing a video lag time.

Referring to FIG. 4, FIG. 4 is a flowchart of another method for processing video data applied to an encoder side according to an example of the present disclosure.

As shown in FIG. 4, the method includes steps S200 to S240.

In step S200, original video data is obtained.

In step S210, the original video data is encoded according to a hierarchical P-frame prediction HPP structure to obtain an HPP bitstream.

In step S220, the HPP bitstream is redundancy-coded by a forward error correction FEC coding method.

Specifically, when the HPP bitstream is redundancy-coded, a quantity of redundancy packets of a frame in a higher temporal layer is less than a quantity of redundancy packets of a frame in a lower temporal layer in the HPP bitstream.

In step S230, the frames in the redundancy-coded HPP bitstream are sequentially sent to a decoder side.

In step S240, the quantity of redundancy packets in each subsequent to-be-sent frame in the HPP bitstream is dynamically adjusted according to a specified adjustment policy when a redundancy level adjustment request sent by the decoder side is received.

The redundancy level adjustment request is a request generated by the decoder side when the decoder side performs an integrity check on received video packets in a current frame and determines according to a check result that the current frame is unable to be decoded.

In this example if a network status is bad, which results in a serious packet loss situation in frames received by the decoder side, the decoder side may send the redundancy level adjustment request to the encoder side, and the encoder side increases the quantity of redundancy packets in each subsequent to-be-sent frame in the HPP bitstream.

Optionally, the process of dynamically adjusting the quantity of redundancy packets in each subsequent to-be-sent frame in the HPP bitstream according to a specified adjustment policy may specifically include adjusting the quantity of redundancy packets in each frame in a specified temporal layer in the HPP bitstream; or adjusting the quantity of redundancy packets in each frame in each temporal layer in the HPP bitstream according to a redundancy packet adjustment ratio corresponding to the temporal layer.

Specifically, the encoder side may only increase the quantity of redundancy packets in each frame in the specified temporal layer. For example, a quantity of redundancy packets in a frame in a temporal layer numbered less than a threshold may be increased. In addition, redundancy packet quantities in frames in temporal layers may be increased according to the same or different adjustment ratios.

For example, at the beginning, the video encoder side sets 50% redundancy packets for frames in a TL0 layer, sets 20% redundancy packets for frames in a TL1 layer, and sets 5% redundancy packets for frames in a TL3 layer.

The video encoder side receives the redundancy level adjustment request at a moment, and increase quantities of redundancy packets, by setting 70% redundancy packets for the frames in the TL0 layer, 40% redundancy packets for the frames in the TL1 layer, and 20% redundancy packets for the frames in the TL3 layer.

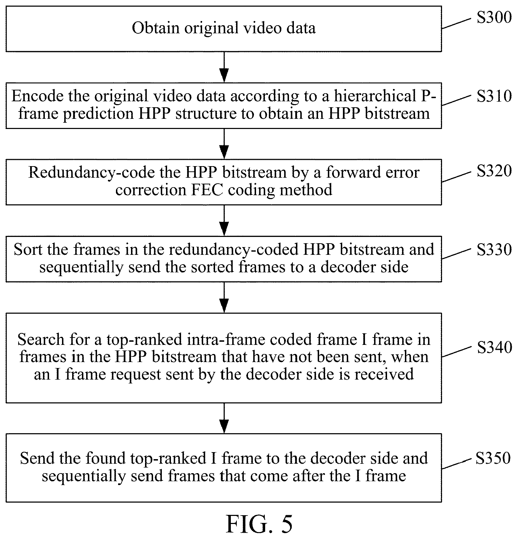

Referring to FIG. 5, FIG. 5 is a flowchart of still another method for processing video data applied to an encoder side according to an example of the present disclosure.

As shown in FIG. 5, the method includes steps S300 to S350.

In step S300, original video data is obtained.

In step S310, the original video data is encoded according to a hierarchical P-frame prediction HPP structure to obtain an HPP bitstream.

In step S320, the HPP bitstream is redundancy-coded by a forward error correction FEC coding method.

Specifically, when the HPP bitstream is redundancy-coded, a quantity of redundancy packets of a frame in a higher temporal layer is less than a quantity of redundancy packets of a frame in a lower temporal layer in the HPP bitstream.

In step S330, the frames in the redundancy-coded HPP bitstream are sorted and sequentially sent to a decoder side.

In step S340, the top-ranked intra-frame coded frame, I frame, is searched for among unsent frames in the HPP bitstream, when an I frame request sent by the decoder side is received.

Specifically, if the encoder side determines that a current frame is in the lowest temporal layer and is incomplete, it indicates that a reference structure is broken. Frames that come after the current frame between the current I frame and a next I frame cannot be decoded because the reference frame is lost. Video lag cannot be avoided in this extreme situation. To shorten a lag time, the I frame request may be directly sent to the video encoder side, to request the video encoder side to immediately send the next I frame.

When receiving the request, the encoder side searches for the top-ranked I frame among unsent frames in the HPP bitstream.

In step S350, the found top-ranked I frame is sent to the decoder side and frames that come after the top-ranked I frame are sequentially sent.

After finding the top-ranked I frame, the encoder side cancels sending of frames that come before the top-ranked I frame, directly jumps to sending of the top-ranked I frame, and then sequentially sends the frames that come after the top-ranked I frame.

In this embodiment, when receiving the I frame request, the encoder side immediately searches for the top-ranked I frame among unsent frames in the HPP bitstream and jumps to sending of the top-ranked I frame and subsequent frames, shortening a video lag time at the decoder side to the largest extent.

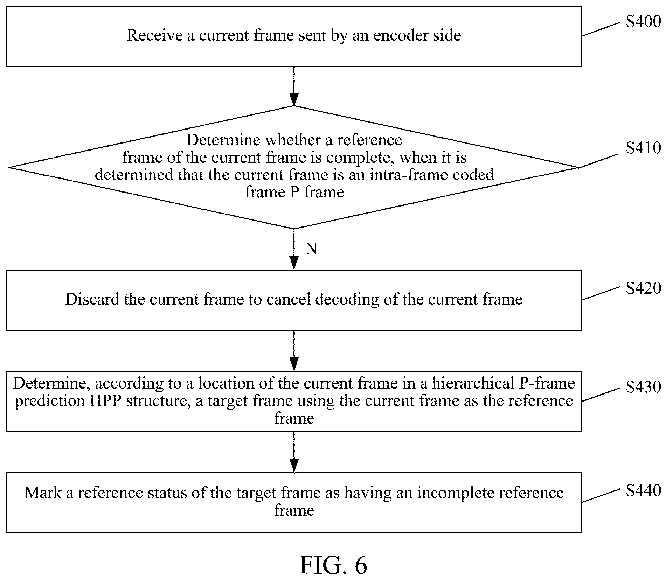

In the following, in the present disclosure, a video data processing process is described from the perspective of a receiver end. Referring to FIG. 6, FIG. 6 is a flowchart of a method for processing video data applied to a decoder side according to an embodiment of the present disclosure.

As shown in FIG. 6, the method includes steps S400 to S440.

In step S400, a current frame sent by an encoder side is received.

The current frame is a frame in a hierarchical P-frame prediction, HPP, bitstream obtained through coding by the encoder side according to an HPP structure.

It may be understood that a frame includes several video packets, and header information of each video packet can record a frame to which the video packet belongs and record that the video packet is an i^{th} packet of total n video packets in the frame. In this step, determining that the current frame is received may include determining that a first video packet in the current frame is received or determining that the last video packet in the current frame is received.

Specifically, a specific implementation of determining that the last video packet in the current frame is received may include: when an n-th video packet in a current frame is received, determining, according to a total quantity n of video packets in the current frame recorded in headers of the received video packets in the current frame, that the video packet is the last video packet in the current frame; or when a video packet in a next frame is received, determining that a previously received video packet is the last video packet in the current frame.

In step S410, it is determined whether a reference frame of the current frame is complete, when it is determined that the current frame is an inter-frame coded frame P frame. If the current frame is not a P frame, steps S420 to S440 is performed.

Specifically, if the reference frame of the current frame cannot be completely formed by packets or cannot be decoded, or a reference frame of the reference frame is incomplete, it means that the current frame cannot be successfully decoded either.

In step S420, the current frame is discarded to cancel decoding of the current frame.

In step S430, it is determined, according to a location of the current frame in a hierarchical P-frame prediction HPP structure, a target frame using the current frame as the reference frame.

Specifically, the target frame using the current frame as the reference frame may be determined according to the HPP coding structure and the location of the current frame in the HPP structure. Referring to FIG. 2, assuming that the current frame is P2, because P3 refers to P2, P3 may be determined as a target frame. For another example, assuming the current frame is P4, because P5, P6, and P8 refer to P4, P5, P6, and P8 may be determined as target frames.

In step S440, a reference status of the target frame is marked as having an incomplete reference frame.

Specifically, because it is determined that the reference frame of the current frame is incomplete, it indicates that the current frame cannot be successfully decoded. Therefore, the target frame using the current frame for reference cannot be successfully decoded, and the reference status of the target frame is set as having an incomplete reference frame.

Optionally, in the present disclosure, different identifiers may be set to represent different reference statuses. For example, "1" represents having an incomplete reference frame, and "0" represents having a complete reference frame. Certainly, other identifiers may be used to represent different reference statuses.

Optionally, steps S420 and S430 may be performed reversely or in parallel. FIG. 6 merely shows an optional manner.

In this embodiment, if the decoder side determines that the received current frame is a P frame, it can be known according to the HPP coding structure that the P frame needs to refer to a previous frame. Therefore, in the present disclosure, it is determined whether the reference frame of the current frame is complete. When the reference frame thereof is incomplete, it indicates that the current frame cannot be successfully decoded. Therefore, the current frame is directly discarded without being decoded, thereby saving a decoding time and shortening a video lag time. Further, in the present disclosure, when the reference frame of the current frame is incomplete, the reference status of the target frame using the current frame as the reference frame is marked as having an incomplete reference frame. When the target frame is subsequently received, whether the reference frame thereof is incomplete may be determined directly by using the reference status of the target frame, which is more convenient.

Optionally, the foregoing process of determining whether the reference frame of the current frame is complete may include steps 1 and 2.

In step 1, a reference status of the current frame is obtained, the reference status being used for indicating whether the reference frame of the current frame is complete.

The reference status of the current frame is previously determined when the reference frame thereof is checked. If the reference frame is successfully decoded, the reference status of the current frame may be set as having a complete reference frame; otherwise, the reference status is set as having an incomplete reference frame.

In step 2, it is determined according to the reference status of the current frame whether the reference frame of the current frame is complete.

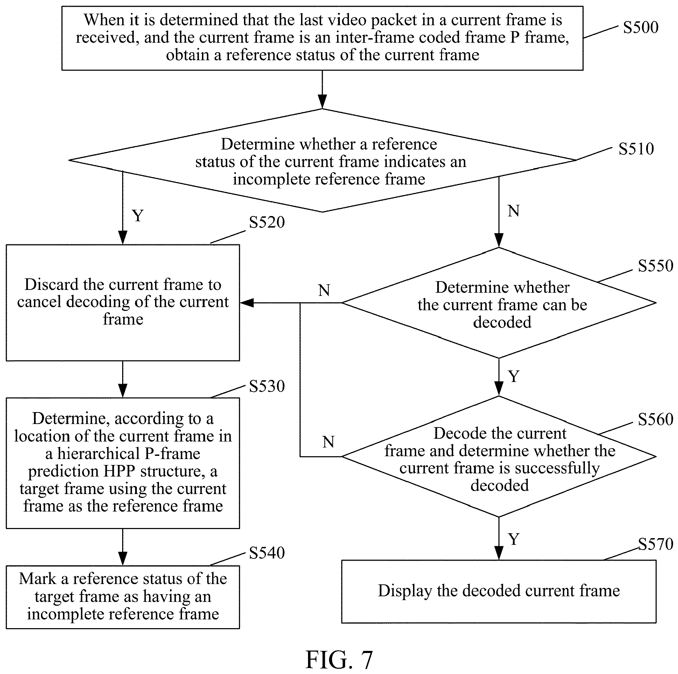

Referring to FIG. 7, FIG. 7 is a flowchart of another method for processing video data applied to a decoder side according to an embodiment of the present disclosure.

As shown in FIG. 7, the method includes steps S500 to S570.

In step S500, When it is determined that the last video packet in a current frame is received, and the current frame is an inter-frame coded frame P frame, a reference status of the current frame is obtained.

The reference status is used for indicating whether a reference frame of the current frame is incomplete.

In step S510, it is determined whether a reference status of the current frame indicates an incomplete reference frame. If the reference status of the current frame indicates an incomplete reference frame, steps S520 to S540 are performed; otherwise, steps S550 to S570 are performed.

In step S520, the current frame is discarded to cancel decoding of the current frame.

In step S530, it is determined, according to a location of the current frame in a hierarchical P-frame prediction HPP structure, a target frame using the current frame as the reference frame.

In step S540, a reference status of the target frame is marked as having an incomplete reference frame.

In step S550, it is determined whether the current frame can be decoded. If the current frame cannot be decoded, step S520 is performed; otherwise, step S560 is performed.

Specifically, an integrity check may be performed on video packets in the current frame that have been cached and it may be determined according to a check result whether the current frame can be decoded, when it is determined that the reference status of the current frame indicates that the reference frame is complete.

If it is determined that the current frame cannot be decoded, step S520 to S540 are performed.

In step S560, the current frame is decoded and it is determined whether the current frame is successfully decoded; if the current frame is successfully decoded, step S570 is performed; otherwise, step S520 is performed.

In step S570, the decoded current frame is displayed.

Specifically, when it is determined that the current frame can be decoded, the current frame is decoded. Whether the current frame is successfully decoded is determined according to a decoding result. If the current frame is successfully decoded, the decoded current frame may be displayed. If the current frame is unsuccessfully decoded, step S520 to S540 are performed.

Compared with the previous embodiment, in this embodiment, a process to be performed when it is determined that the reference status of the current frame indicates a complete reference frame is added. In this embodiment, when it is determined that the reference status of the current frame indicates having a complete reference frame, whether the current frame can be decoded is further determined, and the current frame is decoded only when it is determined that the current frame can be decoded, further decreasing decoding processing on frames that cannot be decoded and shortening a video lag time.

Optionally, in step S550, the process of performing an integrity check on video packets in the current frame that have been cached and determining according to a check result whether the current frame can be decoded may include:
1) determining according to header information of the video packets in the current frame whether the video packets in the current frame that have been cached can form a complete frame, and determining whether packet loss can be recovered when determining that the video packets in the current frame that have been cached cannot form a complete frame; and
2) determining that the current frame can be decoded, if it is determined that the video packets in the current frame that have been cached can form a complete frame or if it is determined that packet loss can be recovered when determining that the video packets in the current frame that have been cached cannot form a complete frame.

It may be understood that if it is determined that a complete frame cannot be formed, and packet loss cannot be recovered, it may be determined that the current frame cannot be decoded.

Specifically, as described above, a frame includes several video packets, and header information of each video packet can record a frame to which the video packet belongs and that the video packet is an i^{th} video packet of total n video packets in the frame. Further, the header information may also record a quantity of redundancy packets in the frame. Based on the above, whether the video packets that have been cached can form a complete frame may be determined according to the video packets in the current frame that have been cached and the header information when receiving of packets in the current frame ends. For example, the header information records that the current frame includes totally n video packets. If a quantity of the video packets that have been cached is less than n, it indicates that a data packet in the current frame is lost, and it is determined that a complete frame cannot be formed.

When it is determined that a complete frame cannot be formed, whether packet loss can be recovered may be further determined. Specifically, if it is determined that a quantity of lost packets in the current frame is less than or equal to a quantity of redundancy packets in the frame recorded in the header information, it may be determined that packet loss can be recovered; otherwise, it is determined that packet loss cannot be recovered.

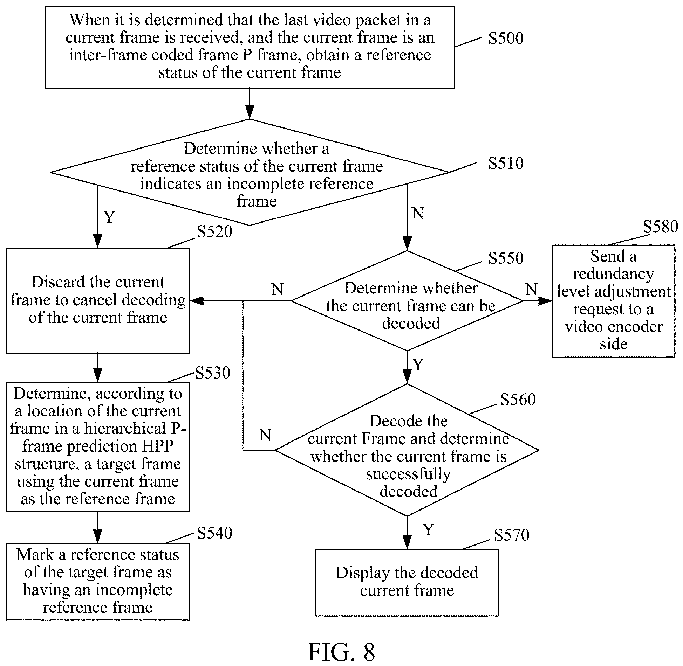

Further, it can be known by comparing FIG. 7 and FIG. 8 that, based on the embodiment corresponding to FIG. 7, if it is determined that the current frame cannot be decoded, the step S580 of sending a redundancy level adjustment request to a video encoder side may be further added. The redundancy level adjustment request is sent to request the video encoder side to increase a quantity of redundancy packets to be sent.

Specifically, if it is determined that the current frame cannot be decoded, it indicates a severe packet loss situation that goes beyond a current recovery capability by the redundancy packets. Therefore, the redundancy level adjustment request may be sent to the video encoder side, to request to increase the quantity of the redundancy packets to be sent.

For an adjustment policy used by the encoder side after receiving the redundancy level adjustment request, one may refer to the foregoing related descriptions, and details are not described herein.

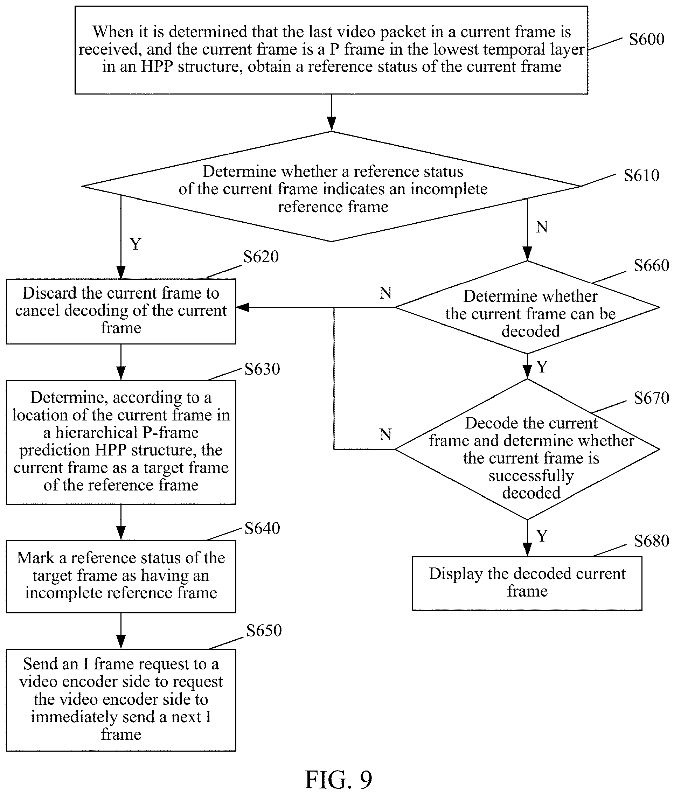

Referring to FIG. 9, FIG. 9 is a flowchart of still another method for processing video data applied to a decoder side according to an embodiment of the present disclosure.

As shown in FIG. 9, the method includes steps S600 to S680.

In step S600, when it is determined that the last video packet in a current frame is received, and the current frame is a P frame in the lowest temporal layer in an HPP structure, obtain a reference status of the current frame.

The reference status is used for indicating whether a reference frame of the current frame is incomplete.

In this step, the current frame is a P frame and is in the lowest temporal layer in an HPP coding structure. Referring to FIG. 2, P4 and P8 are both P frames in the lowest temporal layer.

In step S610, it is determined whether a reference status of the current frame indicates an incomplete reference frame. If the reference status of the current frame indicates an incomplete reference frame, steps S620 to S640 are performed; otherwise, steps S650 to S680 are performed.

In step S620, the current frame is discarded to cancel decoding of the current frame.

In step S630, according to a location of the current frame in the hierarchical P-frame prediction HPP structure, a target frame using the current frame as a reference frame is determined.

In step S640, a reference status of the target frame is marked as having an incomplete reference frame.

In step S650, an I frame request is sent to a video encoder side to request the video encoder side to immediately send a next I frame.

Specifically, if a frame in the lowest temporal layer TL0 in the HPP structure cannot be decoded, a reference structure is broken. Frames that come after the current P frame between the current I frame and a next I frame cannot be decoded because the reference frame is lost. Video lag cannot be avoided in this extreme situation. To shorten a lag time, the I frame request may be directly sent to the video encoder side, to request the video encoder side to immediately send the next I frame.

By this means, a video lag time can be shortened to the largest extent.

In step S660, it is determined whether the current frame can be decoded; if the current frame cannot be decoded, step S620 is performed; otherwise, step S670 is performed.

Specifically, an integrity check may be performed on video packets in the current frame that have been cached and it may be determined according to a check result whether the current frame can be decoded, when it is determined that the reference status of the current frame indicates that the reference frame is complete.

If it is determined that the current frame cannot be decoded, steps S620 to S650 are performed.

In step S670, the current frame is decoded and it is determined whether the current frame is successfully decoded. If the current frame is successfully decoded, step S680 is performed; otherwise, step S620 is performed.

Specifically, if it is determined that the current frame is unsuccessfully decoded, operations of steps S620 to S640 may be performed.

In step S680, the decoded current frame is displayed.

In this embodiment, a video data processing performed when the current frame is a P frame in the lowest temporal layer in the HPP structure is described. Compared to the foregoing embodiments, when it is determined that the reference status of the current frame indicates that the reference frame is incomplete, or it is determined that the current frame cannot be decoded, or it is determined that the current frame is unsuccessfully decoded, the operation of sending an I frame request to a video encoder side to request the video encoder side to immediately send a next I frame is added. In this manner, a video lag time is shortened to the largest extent.

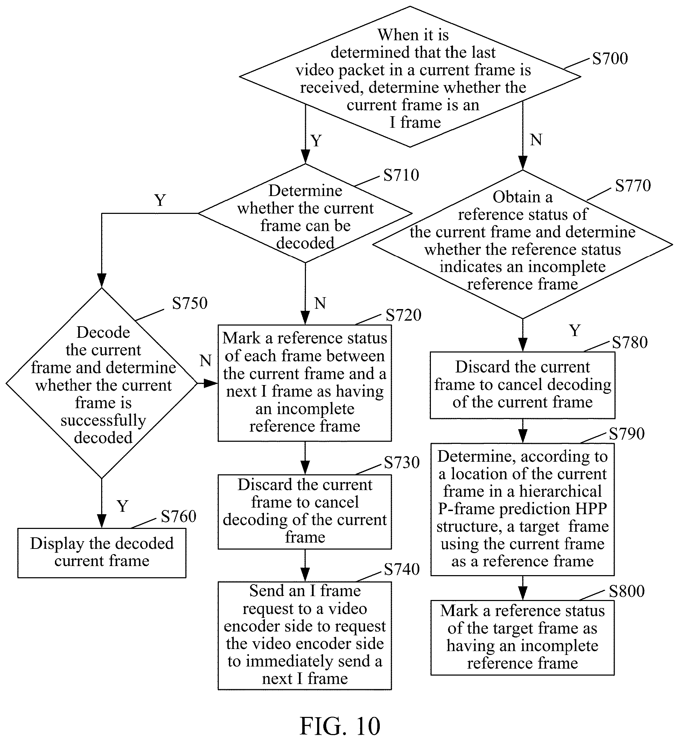

Referring to FIG. 10, FIG. 10 is a flowchart of still another method for processing video data applied to a decoder side according to an embodiment of the present disclosure.

As shown in FIG. 10, the method includes steps S700 to S800.

In step S700, when it is determined that the last video packet in a current frame is received, it is determined whether the current frame is an I frame. If the current frame is an I frame, steps S710 to S760 are performed; otherwise, steps S770 to S800 are performed.

Specifically, if the current frame is an I frame, the current frame has no reference frame. Step S710 may be performed to determine whether the current frame can be decoded. If the current frame is not an I frame, the current frame is a P frame, and step S770 may be performed to obtain a reference status of the current frame.

In step S710, it is determined whether the current frame can be decoded. If the current frame cannot be decoded, steps S720 to S740 are performed; otherwise, step S750 is performed.

Specifically, an integrity check may be performed on video packets in the current frame that have been cached and it may be determined according to a check result whether the current frame can be decoded.

For a detailed check process, one may refer to the foregoing related descriptions, and details are not provided herein.

In step S720, a reference status of each frame between the current frame and a next I frame is marked as having an incomplete reference frame.

Specifically, if it is determined that the current I frame cannot be decoded, it indicates that a reference structure is broken, and P frames between the current I frame and the next I frame cannot be successfully decoded. Therefore, a reference status of each frame between the current frame and the next I frame is marked as having an incomplete reference frame.

In step S730, the current frame is discarded to cancel decoding of the current frame.

In step S740, an I frame request is sent to a video encoder side to request the video encoder side to immediately send a next I frame.

Specifically, the I frame cannot be decoded. As a result, a reference structure is broken. Frames between the current I frame and the next I frame cannot be decoded because reference frames are lost. Video lag cannot be avoided in this extreme situation. To shorten a lag time, the I frame request may be directly sent to the video encoder side, to request the video encoder side to immediately send the next I frame.

By this processing means, a video lag time can be shortened to the largest extent.

In step S750, the current frame is decoded and it is determined whether the current frame is successfully decoded. If the current frame is successfully decoded, step S760 is performed; otherwise, steps S720 to S740 are performed.

Specifically, when it is determined that the current frame can be decoded in step S710, the current frame is decoded, and whether the current frame is successfully decoded is determined according to a decoding result.

In step S760, the decoded current frame is displayed.

In step S770, a reference status of the current frame is obtained and it is determined whether the reference status indicates an incomplete reference frame. If the reference status indicates an incomplete reference frame, step S780 is performed.

Specifically, when it is determined that the current frame is not an I frame in step S700, it indicates that the current frame has a reference frame. In this step, the reference status of the current frame is obtained. The reference status is used for indicating whether the reference frame of the current frame is complete.

In step S780, the current frame is discarded to cancel decoding of the current frame.

In step S790, according to a location of the current frame in a hierarchical P-frame prediction HPP structure, a target frame using the current frame as a reference frame is determined.

In step S800, a reference status of the target frame is marked as having an incomplete reference frame.

Compared with the foregoing embodiments, determining of whether the current frame is an I frame or P frame and a process performed when it is determined that the current frame is an I frame are added in this embodiment. That is, whether the current frame can be decoded and whether the current frame is successfully decoded are directly determined. When it is determined that the current frame cannot be decoded or that the current frame is unsuccessfully decoded, the reference status of each frame between the current frame and the next I frame is marked as having an incomplete reference frame. The current frame is discarded, and the I frame request is sent to the video encoder side, to request to immediately send the next I frame, thereby shortening a video lag time to the largest extent.

An apparatus for processing video data provided in the embodiments of the present disclosure is described below. The apparatus for processing video data described below may mutually correspondingly refer to the method for processing video data described above.

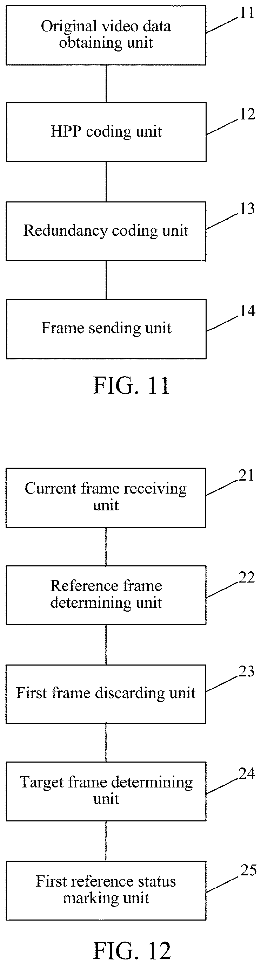

Referring to FIG. 11, FIG. 11 is a schematic structural diagram of an apparatus for processing video data applied to an encoder side according to an example of the present disclosure.

As shown in FIG. 11, the apparatus includes the following units 11 to 14,

An original video data obtaining unit 11 is configured to obtain original video data.

An HPP coding unit 12 is configured to encode the original video data according to a hierarchical P-frame prediction HPP structure to obtain an HPP bitstream.

A redundancy coding unit 13 is configured to redundancy-code the HPP bitstream by a forward error correction FEC coding method, where a quantity of redundancy packets of a frame in a higher temporal layer is less than a quantity of redundancy packets of a frame in a lower temporal layer.

A frame sending unit 14 is configured to sort the frames in the redundancy-coded HPP bitstream and sequentially send the sorted frames to a decoder side.

In the apparatus for processing video data provided in this example of the present disclosure, the encoder side encodes obtained original video data according to a hierarchical P-frame prediction HPP structure to obtain an HPP bitstream, redundancy-codes the HPP bitstream by a forward error correction FEC coding method, where a quantity of redundancy packets of a frame in a higher temporal layer is less than a quantity of redundancy packets of a frame in a lower temporal layer, and at last, sequentially sends the frames in the redundancy-coded HPP bitstream to a decoder side. It can be learned from the above that in the present disclosure, the HPP coding structure is combined with FEC redundancy coding, and a redundancy packet is added to the HPP bitstream encoded according to the HPP coding structure. In addition, in adding the redundancy packets, more redundancy packets are added to frames in lower temporal layers in the HPP structure, so as to especially protect frames in lower temporal layers, which are of high importance. In this manner, even if some packets are lost in a data transmission process, the decoder side can perform packet loss recovery by using the redundancy packet, thereby greatly improving a decoding success rate and reducing a video lag time.

Optionally, the apparatus in the present disclosure may further include a redundancy adjustment unit, configured to dynamically adjust the quantity of redundancy packets in each subsequent to-be-sent frame in the HPP bitstream according to a specified adjustment policy when a redundancy level adjustment request sent by the decoder side is received.

The redundancy level adjustment request is a request generated by the decoder side when the decoder side performs an integrity check on received video packets in a current frame and determines according to the check result that the current frame cannot be decoded.

Optionally, the redundancy adjustment unit may include a redundancy adjustment subunit, configured to adjust the quantity of redundancy packets in each frame in a specified temporal layer in the HPP bitstream; or, adjust the quantity of redundancy packets in each frame in each temporal layer in the HPP bitstream according to a redundancy packet adjustment ratio corresponding to the temporal layer.

Optionally, the apparatus in the present disclosure may further include an I frame search unit and an I frame sending unit.

The I frame search unit is configured to search for the top-ranked intra-frame coded frame, I frame, among unsent frames in the HPP bitstream, when an I frame request sent by the decoder side is received.

The I frame sending unit is configured to send the found top-ranked I frame to the decoder side and sequentially send frames that come after the top-ranked I frame.

Referring to FIG. 12, FIG. 12 is a schematic structural diagram of an apparatus for processing video data applied to a decoder side according to an embodiment of the present disclosure.

As shown in FIG. 12, the apparatus includes the following units 21 to 25.

A current frame receiving unit 21 is configured to receive a current frame sent by an encoder side, the current frame being a frame in a hierarchical P-frame prediction HPP bitstream obtained through coding by the encoder side according to an HPP structure.

A reference frame determining unit 22 is configured to determine whether a reference frame of the current frame is complete, when it is determined that the current frame is an inter-frame coded frame P frame.

A first frame discarding unit 23 is configured to discard the current frame to cancel decoding of the current frame, when the reference frame determining unit determines that the reference frame of the current frame is incomplete.

A target frame determining unit 24 is configured to determine, according to a location of the current frame in the HPP structure, a target frame using the current frame as a reference frame.

A first reference status marking unit 25 is configured to mark a reference status of the target frame as having an incomplete reference frame.

In the apparatus for processing video data provided in this embodiment of the present disclosure, the encoder side encodes obtained original video data according to a hierarchical P-frame prediction HPP structure to obtain an HPP bitstream, redundancy-codes the HPP bitstream by a forward error correction FEC coding method, where a quantity of redundancy packets of a frame in a higher temporal layer is less than a quantity of redundancy packets of a frame in a lower temporal layer, and at last, sequentially sends the frames in the redundancy-coded HPP bitstream to a decoder side. It can be learned from the above that in the present disclosure, the HPP coding structure is combined with FEC redundancy coding, and a redundancy packet is added to the HPP bitstream encoded according to the HPP coding structure. In addition, in adding the redundancy packets, more redundancy packets are added to frames in lower temporal layers in the HPP structure, so as to especially protect frames in lower temporal layers which are of high importance. In this manner, even if some packets are lost in a data transmission process, the decoder side can perform packet loss recovery by using the redundancy packet, thereby greatly improving a decoding success rate and reducing a video lag time.

Optionally, the reference frame determining unit may include a reference status obtaining unit and a reference status determining unit.

The reference status obtaining unit is configured to obtain a reference status of the current frame, the reference status being used for indicating whether the reference frame of the current frame is complete.

The reference status determining unit is configured to determine according to the reference status of the current frame whether the reference frame of the current frame is complete.

Optionally, the current frame receiving unit may be configured to determine that the last video packet in the current frame is received.

Based on the above, the apparatus may further include a first video packet check unit, configured to perform an integrity check on video packets in the current frame that have been cached and determine according to a check result whether the current frame can be decoded, if the reference status of the current frame indicates that the reference frame is complete; and trigger the first frame discarding unit if it is determined that the current frame cannot be decoded.

Further, the apparatus in the present disclosure may further include a first decoding unit and a first display unit.

The first decoding unit is configured to decode the current frame if it is determined that the current frame can be decoded, trigger the first display unit if the decoding is successful, and trigger the first frame discarding unit if the decoding is unsuccessful.

The first display unit is configured to display the decoded current frame.

Optionally, the current frame is in the lowest temporal layer in the HPP structure, and the apparatus may further include a first I frame request unit, configured to send an I frame request to a video encoder side to request the video encoder side to immediately send a next I frame, when it is determined that the reference status of the current frame indicates that the reference frame is incomplete, or that the current frame cannot be decoded, or that decoding of the current frame is unsuccessful.

Optionally, the apparatus in the present disclosure may further include a redundancy level adjustment sending unit, configured to send a redundancy level adjustment request to a video encoder side to request the video encoder side to increase a quantity of redundancy packets to be sent, when it is determined according to the check result that the current frame cannot be decoded.

Optionally, the apparatus in the present disclosure may further include a second video packet check unit, a second reference status marking unit, a second frame discarding unit and a second I frame request unit.

The second video packet check unit is configured to perform an integrity check on video packets in the current frame that have been cached and determine according to a check result whether the current frame can be decoded, when it is determined that the last video packet in the current frame is received and the current frame is an intra-frame coded frame I frame.

The second reference status marking unit is configured to mark a reference status of each frame between the current frame and a next I frame as having an incomplete reference frame, if it is determined that the current frame cannot be decoded.

The second frame discarding unit is configured to discard the current frame to cancel decoding of the current frame.

The second I frame request unit is configured to send an I frame request to a video encoder side to request the video encoder side to immediately send the next I frame.

Optionally, the apparatus in the present disclosure may further include a second decoding unit and a second display unit.

The second decoding unit is configured to decode the current frame if the current frame is an I frame and it is determined that the current frame can be decoded, trigger the second display unit if the decoding is successful, and mark a reference status of each frame between the current frame and a next I frame as having an incomplete reference frame if the decoding is unsuccessful.

The second display unit is configured to display the decoded current frame.

Optionally, the first video packet check unit may include a framing and recovery determining unit and a decoding determining unit.

The framing and recovery determining unit is configured to, if the reference status of the current frame indicates that the reference frame is complete, determine according to header information of the video packets in the current frame whether the video packets in the current frame that have been cached can form a complete frame, and determine whether packet loss can be recovered when determining that the video packets in the current frame that have been cached cannot form a complete frame.

The decoding determining unit is configured to determine that the current frame can be decoded, if it is determined that the video packets in the current frame that have been cached can form a complete frame or if it is determined that packet loss can be recovered when determining that the video packets in the current frame that have been cached cannot form a complete frame.

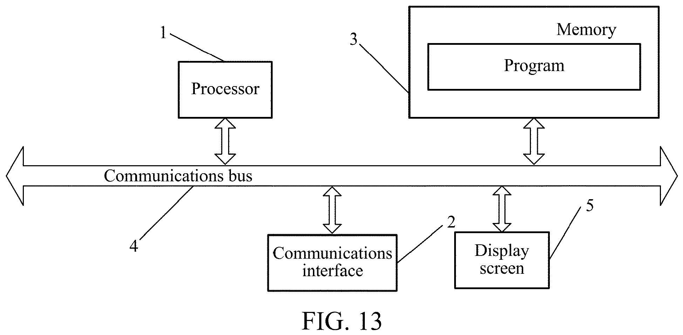

For hardware structures of the encoder side and the decoder side, FIG. 13 may be referred to. FIG. 13 is a schematic diagram of hardware structure of a terminal according to an embodiment of the present disclosure.

As shown in FIG. 13, the terminal may include a processor 1, a communications interface 2, a memory 3, a communications bus 4 and a display screen 5.

The processor 1, communications interface 2, memory 3 and display screen 5 communicate with each other through the communications bus 4.

Optionally, the communication interface 2 may be an interface of a communications module, such as an interface of a GSM module.

The processor 1 is configured to execute a program.

The memory 3 is configured to store a program.

The program may include program code, and the program code includes an operation instruction of the processor.

The processor 1 may be a central processing unit (CPU) or an application specific integrated circuit (ASIC) or may be configured as one or more integrated circuits for implementing the embodiments of the present disclosure.

The memory 3 may include a high-speed RAM memory, and may also include a non-volatile memory, for example, at least one magnetic disk memory.

The program may be specifically used for:
receiving a current frame sent by an encoder side, the current frame being a frame in a hierarchical P-frame prediction HPP bitstream obtained through coding by the encoder side according to an HPP structure;
determining whether a reference frame of the current frame is complete, when it is determined that the current frame is an inter-frame coded frame P frame;
discarding the current frame to cancel decoding of the current frame, if the reference frame of the current frame is incomplete;
determining, according to a location of the current frame in the HPP structure, a target frame using the current frame as the reference frame; and
marking a reference status of the target frame as having an incomplete reference frame.

As last, it should be noted that the relational terms herein such as first and second are used only to distinguishing an entity or operation from another entity or operation, and do not require or imply any actual relationship or sequence between these entities or operations. Moreover, the terms "include", "comprise", and any other variant thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. Unless otherwise specified, an element limited by "include a/an..." does not exclude other same elements existing in the process, method, object, or device that includes the elements.

It should be noted that the embodiments in this specification are all described in a progressive manner. Description of each of the embodiments focuses on differences from other embodiments, and reference may be made to each other for the same or similar parts among respective embodiments.

## Claims

1. A method for processing video data, applied to a decoder side, the method comprising:
receiving a current frame sent by an encoder side, the current frame being a frame in a hierarchical P-frame prediction, HPP, bitstream obtained through coding by the encoder side according to an HPP structure, wherein the HPP bitstream corresponds to different temporal layers, a frame in a higher temporal layer is to be decoded with reference to a frame in a lower temporal layer, and neighboring frames are in different temporal layers;
obtaining a reference status of the current frame, when it is determined that the last video packet in a current frame is received and the current frame is an inter-frame coded frame, P frame, in the lowest temporal layer in the HPP structure;
determining whether the reference status of the current frame indicates an incomplete reference frame,;
if the reference status of the current frame indicates an incomplete reference frame, performing the following steps in the listed order:
discarding the current frame to cancel decoding of the current frame,
determining, according to a location of the current frame in the HPP structure, a target frame using the current frame as a reference frame; and
marking a reference status of the target frame as having an incomplete reference frame,
sending an I frame request to the encoder side to request the encoder side to immediately send a next I frame,
if the reference status of the current frame indicates a complete reference frame:
determining whether the current frame can be decoded based on a result of an integrity check performed on video packets in the current frame that have been cached;
decoding the current frame upon determination that the current frame can be decoded, and determining whether the current frame is successfully decoded; or, executing the above operation of discarding the current frame to cancel decoding of the current frame, if it is determined that the current frame is unable to be decoded;
displaying the decoded current frame upon determination that the current frame is successfully decoded; or, executing the above operation of discarding the current frame to cancel decoding of the current frame, if the decoding is unsuccessful wherein the method further comprises:
sending an I frame request to the encoder side to request the encoder side to immediately send a next I frame, when it is determined that the current frame is in the lowest temporal layer in the HPP structure and that the reference status of the current frame indicates that the reference frame is incomplete, or the current frame is unable to be decoded, or decoding of the current frame is unsuccessful.

2. The method according to claim 1, further comprising:
executing the operation of marking a reference status of each frame between the current frame and a next I frame as having an incomplete reference frame, if the decoding is unsuccessful.

3. The method according to claim 1, wherein the performing an integrity check on video packets in the current frame that have been cached and determining according to a check result whether the current frame is able to be decoded comprises:
determining according to header information of the video packets in the current frame whether the video packets in the current frame that have been cached are able to form a complete frame, and determining whether packet loss is able to be recovered when it is determined that the video packets in the current frame that have been cached are unable to form a complete frame; and
determining that the current frame is able to be decoded, if it is determined that the video packets in the current frame that have been cached are able to form a complete frame or if it is determined that packet loss is able to be recovered when it is determined that the video packets in the current frame that have been cached are unable to form a complete frame.

4. An apparatus for processing video data, applied to a decoder side, the apparatus comprising:
a current frame receiving unit, configured to receive a current frame sent by an encoder side, the current frame being a frame in a hierarchical P-frame prediction, HPP, bitstream obtained through coding by the encoder side according to an HPP structure, where the HPP bitstream corresponds to different temporal layers, a frame in a higher temporal layer is to be decoded with reference to a frame in a lower temporal layer, and neighboring frames are in different temporal layers;
a unit, configured to obtain a reference status of the current frame, when it is determined that the last video packet in a current frame is received and the current frame is an inter-frame coded frame, P frame;
a reference status determining unit, configured to determine whether the reference status of the current frame indicates an incomplete reference frame;
a first frame discarding unit, configured to, if the reference status determining unit determines that the reference status of the current frame indicates an incomplete frame, discard the current frame to cancel decoding of the current frame;
a target frame determining unit, configured to, if the reference status determining unit determines that the reference status of the current frame indicates an incomplete frame, determine, according to a location of the current frame in the HPP structure, a target frame using the current frame as a reference frame;
a first reference status marking unit, configured to, if the reference status determining unit determines that the reference status of the current frame indicates an incomplete frame mark a reference status of the target frame as having an incomplete reference frame;
wherein the apparatus is further configured to send an I frame request to the encoder side to request the encoder side to immediately send a next I frame;
the apparatus further configured to perform the following steps, if the reference status of the current frame indicates a complete reference frame:
determining whether the current frame can be decoded based on a result of an integrity check performed on video packets in the current frame that have been cached;
decoding the current frame upon determination that the current frame can be decoded, and determining whether the current frame is successfully decoded; or, executing the above operation of discarding the current frame to cancel decoding of the current frame, if it is determined that the current frame is unable to be decoded;
displaying the decoded current frame upon determination that the current frame is successfully decoded; or, executing the above operation of discarding the current frame to cancel decoding of the current frame, if the decoding is unsuccessful;
wherein the apparatus further comprises:
a first I frame request unit, configured to send an I frame request to a video encoder side to request the video encoder side to immediately send a next I frame, when it is determined that the current frame is in the lowest temporal layer in the HPP structure and that the reference status of the current frame indicates that the reference frame is incomplete, or the current frame cannot be decoded, or decoding of the current frame is unsuccessful.

## Patentansprüche

1. Verfahren zur Verarbeitung von Videodaten, angewandt auf eine Decodierer-Seite, wobei das Verfahren aufweist:
Empfangen eines aktuellen Frames, der von einer Codierer-Seite gesendet wird, wobei der aktuelle Frame ein Frame in einem hierarchischen P-Frame-Prediction-, HPP-, Bitstrom ist, der durch Codierung durch die Codierer-Seite gemäß einer HPP-Struktur erhalten wird, wobei der HPP-Bitstrom verschiedenen zeitlichen Schichten entspricht, ein Frame in einer höheren zeitlichen Schicht mit Bezug auf einen Frame in einer niedrigeren zeitlichen Schicht zu decodieren ist und benachbarte Frames in verschiedenen zeitlichen Schichten sind;
Erhalten eines Referenzstatus des aktuellen Frames, wenn ermittelt wird, dass das letzte Videopaket in einem aktuellen Frame empfangen wird und der aktuelle Frame ein Inter-Frame-codierter Frame, P-Frame, in der untersten zeitlichen Schicht in der HPP-Struktur ist;
Ermitteln, ob der Referenzstatus des aktuellen Frames auf einen unvollständigen Referenz-Frame hinweist;
wenn der Referenzstatus des aktuellen Frames auf einen unvollständigen Frame hinweist, Ausführen der folgenden Schritte in der angegebenen Reihenfolge:
Verwerfen des aktuellen Frames, um die Dekodierung des aktuellen Frames abzubrechen,
Ermitteln, entsprechend einer Stelle des aktuellen Frames in der HPP-Struktur, eines Ziel-Frames unter Verwendung des aktuellen Frames als Referenz-Frame; und
Kennzeichnen eines Referenzstatus des Ziel-Frames als unvollständiger Frame,
Senden einer I-Frame-Anforderung an die Codierer-Seite, um die Codierer-Seite aufzufordern, sofort einen nächsten I-Frame zu senden,
wenn der Referenzstatus des aktuellen Frames auf einen vollständigen Referenz-Frame hinweist:
Ermitteln, ob der aktuelle Frame dekodiert werden kann, basierend auf einem Ergebnis einer Integritätsprüfung, die an Videopaketen im aktuellen Frame ausgeführt wird, die zwischengespeichert wurden;
Dekodieren des aktuellen Frames, wenn ermittelt wird, dass der aktuelle Frame dekodiert werden kann, und Ermitteln, ob der aktuelle Frame erfolgreich dekodiert wird; oder Ausführen des obigen Vorgangs des Verwerfens des aktuellen Frames, um die Dekodierung des aktuellen Frames abzubrechen, wenn ermittelt wird, dass der aktuelle Frame nicht dekodiert werden kann;
Anzeigen des decodierten aktuellen Frames, wenn ermittelt wird, dass der aktuelle Frame erfolgreich decodiert wurde; oder Ausführen des obigen Vorgangs des Verwerfens des aktuellen Frames, um die Decodierung des aktuellen Frames abzubrechen, wenn die Decodierung nicht erfolgreich ist;
wobei das Verfahren ferner aufweist:
Senden einer I-Frame-Anforderung an die Codierer-Seite, um die Decodierer-Seite aufzufordern, sofort einen nächsten I-Frame zu senden, wenn ermittelt wird, dass sich der aktuelle Frame in der untersten zeitlichen Schicht in der HPP-Struktur befindet und dass der Referenzstatus des aktuellen Frames darauf hinweist, dass der Referenz-Frame unvollständig ist oder der aktuelle Frame nicht decodiert werden kann oder die Decodierung des aktuellen Frames nicht erfolgreich ist.

2. Verfahren nach Anspruch 1, des Weiteren aufweisend:
Ausführen des Vorgangs des Kennzeichnens eines Referenzstatus jedes Frames zwischen dem aktuellen Frame und einem nächsten I-Frame dahingehend, dass er einen unvollständigen Referenz-Frame hat, wenn die Dekodierung nicht erfolgreich ist.

3. Verfahren nach Anspruch 1, wobei das Ausführen einer Integritätsprüfung an Videopaketen im aktuellen Frame, die zwischengespeichert wurden, und das Ermitteln nach einem Prüfergebnis, ob der aktuelle Frame dekodiert werden kann, aufweist:
Ermitteln entsprechend der Header-Information der Videopakete in dem aktuellen Frame, ob die Videopakete in dem aktuellen Frame, die zwischengespeichert wurden, in der Lage sind, einen vollständigen Frame zu bilden, und Ermitteln, ob der Paketverlust wiederhergestellt werden kann, wenn ermittelt wird, dass die Videopakete in dem aktuellen Frame, die zwischengespeichert wurden, nicht in der Lage sind, einen vollständigen Frame zu bilden; und
Ermitteln, dass der aktuelle Frame dekodiert werden kann, wenn ermittelt wird, dass die Videopakete im aktuellen Frame, die zwischengespeichert wurden, einen vollständigen Frame bilden können, oder wenn ermittelt wird, dass der Paketverlust wiederhergestellt werden kann, wenn ermittelt wird, dass die Videopakete im aktuellen Frame, die zwischengespeichert wurden, keinen vollständigen Frame bilden können.

4. Gerät zur Verarbeitung von Videodaten, das auf der Seite eines Decodierers angewendet wird, wobei das Gerät aufweist:
eine Empfangseinheit für aktuelle Frames, die ausgebildet ist, um einen aktuellen Frame zu empfangen, der von einer Codierer-Seite gesendet wird, wobei der aktuelle Frame ein Frame in einem hierarchischen P-Frame-Prediction, HPP-, Bitstrom ist, der durch Codierung durch die Codierer-Seite gemäß einer HPP-Struktur erhalten wird, wobei der HPP-Bitstrom verschiedenen zeitlichen Schichten entspricht, ein Frame in einer höheren zeitlichen Schicht mit Bezug auf einen Frame in einer niedrigeren zeitlichen Schicht zu decodieren ist und benachbarte Frames in verschiedenen zeitlichen Schichten sind;
eine Einheit, die dazu ausgebildet ist, einen Referenzstatus des aktuellen Frames zu erhalten, wenn ermittelt wird, dass das letzte Videopaket in einem aktuellen Frame empfangen wird und der aktuelle Frame ein inter-frame-codierter Frame, P-Frame, ist;
eine Referenzstatus-Ermittlungseinheit, die dazu ausgebildet ist, zu ermitteln, ob der Referenzstatus des aktuellen Frames auf einen unvollständigen Referenz-Frame hinweist;
eine erste Frame-Verwerfungseinheit, die dazu ausgebildet ist, wenn die Referenzstatus-Ermittlungseinheit ermittelt, dass der Referenzstatus des aktuellen Frames auf einen unvollständigen Frame hinweist, den aktuellen Frame zu verwerfen, um die Decodierung des aktuellen Frames abzubrechen;
eine Ziel-Frame-Ermittlungseinheit, die dazu ausgebildet ist, wenn die Referenzstatus-Ermittlungseinheit ermittelt, dass der Referenzstatus des aktuellen Frames auf einen unvollständigen Frame hinweist, Ermitteln, entsprechend einer Stelle des aktuellen Frames in der HPP-Struktur, eines Ziel-Frames unter Verwendung des aktuellen Frames als Referenz-Frame;
eine erste Referenzstatus-Kennzeichnungseinheit, die dazu ausgebildet ist, wenn die Referenzstatus-Ermittlungseinheit ermittelt, dass der Referenzstatus des aktuellen Frames auf einen unvollständigen Frame hinweist, Kennzeichnen eines Referenzstatus des Ziel-Frames als einen unvollständigen Referenz-Frame;
wobei das Gerät dazu ausgebildet ist, eine I-Frame-Anforderung an die Codierer-Seite zu senden, um die Codierer-Seite aufzufordern, sofort einen nächsten I-Frame zu senden;
das Gerät ferner dazu ausgebildet ist, die folgenden Schritte auszuführen, wenn der Referenzstatus des aktuellen Frames auf einen vollständigen Referenz-Frame hinweist:
Ermitteln, ob der aktuelle Frame dekodiert werden kann, basierend auf einem Ergebnis einer Integritätsprüfung, die an Videopaketen im aktuellen Frame ausgeführt wird, die zwischengespeichert wurden;
Dekodieren des aktuellen Frames, wenn ermittelt wird, dass der aktuelle Frame dekodiert werden kann, und Ermitteln, ob der aktuelle Frame erfolgreich dekodiert wird; oder Ausführen des obigen Vorgangs des Verwerfens des aktuellen Frames, um die Dekodierung des aktuellen Frames abzubrechen, wenn ermittelt wird, dass der aktuelle Frame nicht dekodiert werden kann;
Anzeigen des decodierten aktuellen Frames, wenn ermittelt wird, dass der aktuelle Frame erfolgreich decodiert wurde; oder Ausführen des obigen Vorgangs des Verwerfens des aktuellen Frames, um die Decodierung des aktuellen Frames abzubrechen, wenn die Decodierung nicht erfolgreich ist;
wobei das Gerät ferner aufweist:
eine erste I-Frame-Anforderungseinheit, die dazu ausgebildet ist, eine I-Frame-Anforderung an eine Video-Codierer-Seite zu senden, um die Video-Codierer-Seite aufzufordern, sofort einen nächsten I-Frame zu senden, wenn ermittelt wird, dass sich der aktuelle Frame in der untersten zeitlichen Schicht in der HPP-Struktur befindet und dass der Referenzstatus des aktuellen Frames darauf hinweist, dass der Referenz-Frame unvollständig ist oder der aktuelle Frame nicht decodiert werden kann oder die Decodierung des aktuellen Frames erfolglos ist.

## Revendications

1. Procédé de traitement des données vidéo, appliquée à un côté décodeur, la méthode comprenant les étapes consistant à :
recevoir une trame courante envoyée par un côté encodeur, la trame courante étant une trame dans un flux binaire de prédiction de trame P hiérarchique, HPP, obtenu par codage par le côté encodeur selon une structure HPP, dans laquelle le flux binaire HPP correspond à différentes couches temporelles, une trame dans une couche temporelle supérieure doit être décodée en référence à une trame dans une couche temporelle inférieure, et les trames voisines sont dans des couches temporelles différentes ;
obtenir un état de référence de la trame actuelle, lorsqu'il est déterminé que le dernier paquet vidéo d'une trame actuelle est reçu et que la trame actuelle est une trame codée inter-trames, trame P, dans la couche temporelle la plus basse de la structure HPP ;
déterminer si l'état de référence de la trame actuelle indique une trame de référence incomplète ;
si l'état de référence de la trame actuelle indique une trame de référence incomplète, exécuter les étapes suivantes dans l'ordre indiqué :
rejeter la trame courante pour annuler le décodage de la trame courante, déterminer, en fonction d'un emplacement de la trame courante dans la structure HPP, une trame cible utilisant la trame courante comme trame de référence ;
et en marquant un état de référence de la trame cible comme ayant une trame de référence incomplète, en envoyant une demande de trame I au côté codeur pour demander au côté codeur d'envoyer immédiatement une trame I suivante, si l'état de référence de la trame actuelle indique une trame de référence complète :
déterminer si la trame actuelle peut être décodée sur la base du résultat d'un contrôle d'intégrité effectué sur les paquets vidéo de la trame actuelle qui ont été mis en cache ;
décoder la trame en cours après avoir déterminé que la trame en cours peut être décodée, et déterminer si la trame en cours est décodée avec succès ;
ou, exécution de l'opération susmentionnée d'élimination de la trame courante pour annuler le décodage de la trame courante, s'il est déterminé que la trame courante ne peut pas être décodée ;
afficher la trame courante décodée après avoir déterminé que la trame courante est décodée avec succès ; ou, exécuter l'opération ci-dessus d'écarter la trame courante pour annuler le décodage de la trame courante, si le décodage est sans succès, dans lequel le procédé comprend en outre les étapes consistant à :
envoyer une demande de trame I au côté codeur pour lui demander d'envoyer immédiatement une trame I suivante, lorsqu'il est déterminé que la trame actuelle se trouve dans la couche temporelle la plus basse de la structure HPP et que l'état de référence de la trame actuelle indique que la trame de référence est incomplète, ou que la trame actuelle est incapable d'être décodée, ou que le décodage de la trame actuelle est sans succès.

2. Procédé selon la revendication 1, comprenant en outre les étapes consistant à :
exécuter l'opération consistant à marquer un état de référence de chaque trame entre la trame courante et une trame I suivante comme ayant une trame de référence incomplète, si le décodage est sans succès.

3. Procédé selon la revendication 1, dans lequel l'exécution d'un contrôle d'intégrité sur les paquets vidéo de la trame courante qui ont été mis en cache et la détermination en fonction d'un résultat de contrôle si la trame courante peut être décodée comprennent :
déterminer en fonction des informations d'en-tête des paquets vidéo dans la trame actuelle si les paquets vidéo dans la trame actuelle qui ont été mis en cache sont capables de former une trame complète, et déterminer si la perte de paquets est capable d'être récupérée lorsqu'il est déterminé que les paquets vidéo dans la trame actuelle qui ont été mis en cache sont incapables de former une trame complète ; et.
déterminer que la trame actuelle peut être décodée s'il est établi que les paquets vidéo de la trame actuelle qui ont été mis en cache peuvent former une trame complète ou s'il est établi que la perte de paquets peut être récupérée lorsqu'il est établi que les paquets vidéo de la trame actuelle qui ont été mis en cache sont incapables de former une trame complète.

4. Appareil de traitement de données vidéo, appliqué à un côté décodeur, l'appareil comprenant :
une unité de réception de trame courante, configurée pour recevoir une trame courante envoyée par un côté encodeur, la trame courante étant une trame dans un flux binaire de prédiction de trame P hiérarchique, HPP, obtenu par codage par le côté encodeur selon une structure HPP, où le flux binaire HPP correspond à différentes couches temporelles, une trame dans une couche temporelle supérieure doit être décodée en référence à une trame dans une couche temporelle inférieure, et les trames voisines sont dans des couches temporelles différentes ;
une unité configurée pour obtenir un état de référence de la trame courante, lorsqu'il est déterminé que le dernier paquet vidéo d'une trame courante est reçu et que la trame courante est une trame codée inter-trames, trame P ;
une unité de détermination de l'état de référence, configurée pour déterminer si l'état de référence de la trame en cours indique une trame de référence incomplète ;
une unité de rejet de la première trame, configurée pour, si l'unité de détermination de l'état de référence détermine que l'état de référence de la trame courante indique une trame incomplète, rejeter la trame courante pour annuler le décodage de la trame courante ;
une unité de détermination de la trame cible, configurée pour, si l'unité de détermination de l'état de référence détermine que l'état de référence de la trame courante indique une trame incomplète, déterminer, en fonction d'un emplacement de la trame courante dans la structure HPP, une trame cible utilisant la trame courante comme trame de référence ;
une première unité de marquage de l'état de référence, configurée pour, si l'unité de détermination de l'état de référence détermine que l'état de référence de la trame actuelle indique une trame incomplète, marquer un état de référence de la trame cible comme ayant une trame de référence incomplète ;
l'appareil est en outre configuré pour envoyer une demande de trame I au côté codeur pour lui demander d'envoyer immédiatement une trame I suivante ;
l'appareil est en outre configuré pour effectuer les étapes suivantes, si l'état de référence de la trame actuelle indique une trame de référence complète, consistant à :
déterminer si la trame actuelle peut être décodée sur la base du résultat d'un contrôle d'intégrité effectué sur les paquets vidéo de la trame actuelle qui ont été mis en cache ;
décoder la trame en cours après avoir déterminé que la trame en cours peut être décodée, et déterminer si la trame en cours est décodée avec succès ;
ou, exécuter l'opération ci-dessus d'élimination de la trame courante pour annuler le décodage de la trame courante, s'il est déterminé que la trame courante est incapable d'être décodée ;
afficher la trame courante décodée après avoir déterminé que la trame courante a été décodée avec succès ;
ou, exécuter l'opération ci-dessus d'élimination de la trame courante pour annuler le décodage de la trame courante, si le décodage est sans succès ;
dans lequel l'appareil comprend en outre
une première unité de demande de trame I, configurée pour envoyer une demande de trame I à un côté encodeur vidéo pour demander au côté encodeur vidéo d'envoyer immédiatement une trame I suivante, lorsqu'il est déterminé que la trame actuelle se trouve dans la couche temporelle la plus basse de la structure HPP et que l'état de référence de la trame actuelle indique que la trame de référence est incomplète, ou que la trame actuelle ne peut pas être décodée, ou que le décodage de la trame actuelle est sans succès.
